(19) Europäisches Patentamt
European Patent Office
Office européen des brevets

(11) Veröffentlichungsnummer: **0 205 510**
**B1**

(12) # EUROPÄISCHE PATENTSCHRIFT

(45) Veröffentlichungstag der Patentschrift: **24.05.89**

(51) Int. Cl.⁴: **C 09 B 67/00**, C 08 J 3/22, C 08 K 9/10

(21) Anmeldenummer: **86900123.0**

(22) Anmeldetag: **12.12.85**

(86) Internationale Anmeldenummer: **PCT/EP 85/00700**

(87) Internationale Veröffentlichungsnummer: **WO 86/03763 (03.07.86** Gazette **86/14)**

(54) **PULVERPIGMENTE MIT VERBESSERTEN RHEOLOGISCHEN EIGENSCHAFTEN, VERFAHREN ZU IHRER HERSTELLUNG UND IHRE VERWENDUNG MIT EINEM GEHALT VON MINDESTENS 5% UNSUBSTITUIERTEM CHINACRIDON.**

(30) Priorität: **18.12.84 DE 3446088**
**30.11.85 DE 3542437**

(43) Veröffentlichungstag der Anmeldung: **30.12.86 Patentblatt 86/52**

(45) Bekanntmachung des Hinweises auf die Patenterteilung: **24.05.89 Patentblatt 89/21**

(84) Benannte Vertragsstaaten: **CH DE FR GB IT LI NL**

(56) Entgegenhaltungen:
**EP-A- 0 074 080**
**EP-A- 0 154 678**

(73) Patentinhaber: **HOECHST AKTIENGESELLSCHAFT, Postfach 80 03 20, D-6230 Frankfurt am Main 80 (DE)**

(72) Erfinder: **SPIETSCHKA, Ernst, Kirchweg 3, D-6270 Idstein/Taunus (DE)**
Erfinder: **KROH, Adolf, Vorderstrasse 27, D-6251 Selters/Taunus (DE)**
Erfinder: **HAFNER, Otmar, Zum Talblick 27, D-6246 Glashütten/Taunus (DE)**

**EP 0 205 510 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Pulverpigmente, die mit 1 bis 20 Gew.-%, bezogen auf die nicht beschichteten Pulverpigmente, der Wirksubstanz eines Additivs der Polyurethanreihe beschichtet sind und mindestens 5 Gew.-% unsubstituiertes Chinacridon enthalten, mit verbesserten rheologischen Eigenschaften zum Pigmentieren von polymeren Materialien, insbesondere von herkömmlichen und modernen Lacksystemen vom Typ der «high solids» sowie das Verfahren zu ihrer Herstellung.

Bei der Dispergierung organischer Pigmente in Lacksystemen muß angestrebt werden, daß eine optimale Stabilisierung der Pigmentteilchen mit den Bindemitteln des Lacksystems erreicht wird. Für den Grad dieser Stabilisierung ist neben der chemischen Konstitution und der physikalischen Beschaffenheit der Pigmente die Dispergiermethode und vor allem die Bindemittelart und die Lösemittelmenge des Lacksystems entscheidend. Mangelhafte Stabilisierung führt neben der Verschlechterung des coloristischen Bildes zu Glanz-, Viskositäts- und Flockulationsproblemen. Zur Verbesserung dieses Verhaltens der Pigmente sind eine Reihe von Maßnahmen bekannt, die alle in herkömmlichen Lacksystemen zu einer deutlichen Minderung der Probleme führen. Im einzelnen seien hier folgende genannt: die Präparierung mit oberflächenaktiven Mitteln, wie z.B. Harzseifen, Alkylphenolpolyglykoläthersulfonaten (DE-PS 2 152 485) oder quaternären Ammoniumverbindungen (Patentanmeldung P 33 38 806.7); bei Kupferphthalocyaninen oder Chinacridonen der Zusatz von geringen Mengen von Sulfonsäure oder Sulfonsäurederivaten des zugrundeliegenden Pigments. Außerdem ist eine Reihe von Lackadditiven bekannt und teilweise im Handel, die bei der Lackkonditionierung zur Verbesserung des rheologischen Verhaltens zugesetzt werden.

Durch neue Entwicklung auf dem Lackgebiet mit dem Ziel drastischer Verringerung der Lösemittelmenge und deutlicher Verkleinerung der Bindemittelmoleküle, wie beispielsweise in Richtung «TSA-NAD» (thermosetting acrylic-non aqueous dispersion) und «high solids» (Lacksysteme mit einem Bindemittelanteil von mehr als 50% bei der Verarbeitung) ergeben sich erhebliche Schwierigkeiten, eine perfekte Stabilisierung der Pigmente in diesen Lacksystemen zu erreichen. Aus diesem Grund wurden spezielle Additive entwickelt, die entweder

1. durch gemeinsame mechanische Dispergierung mit den Pigmenten in Lösemitteln und anschließende Kombination mit dem Lack das Problem lösen sollen oder
2. der Lack/Pigment-Mischung vor der mechanischen Dispergierung zugesetzt werden.

Ein Beispiel für den erstgenannten Weg stellen die Gegenstände der US-PS 4 029 861, 4 032 698, 4 048 207 und 4 070 388 dar. Hierbei wird das Pigment mit den polymeren Wirksubstanzen, die in organischen Lösemitteln gelöst vorliegen, im Lacklösemittel einer Vordispergierung unterworfen, wobei bis zu 50% Wirksubstanz, bezogen auf das eingesetzte Pigment, zur Anwendung gelangen. Die so erhaltene Pigmentdispersion wird dann dem Lackbindemittelsystem zur Pigmentierung zugesetzt.

Die zur Dispergierung eingesetzten polymeren Materialien werden durch Verknüpfung von polymeren Lackbausteinen über mindestens bifunktionelle Isocyanate der aliphatischen und aromatischen Reihe mit organischen Verbindungen, die saure, basische oder Silan-Endgruppen tragen, hergestellt. Dabei kann die Verknüpfung sowohl über Urethan- als auch über Harnstoffgruppierungen erfolgen.

Für den zweiten genannten Weg sind eine ganze Reihe von Netz- und Dispergieradditiven bekannt.

In der EP-A-0 154 678 [Stand der Technik nach Artikel 54(3) EPÜ] werden als Dispergiermittel geeignete Additionsverbindungen vorgeschlagen, die durch Umsetzung von Polyisocyanaten mit einer mittleren Funktionalität von 2,5 bis 6 mit Monohydroxyverbindungen, Umsetzung des erhaltenen Reaktionsproduktes mit Verbindungen der Formel II

$$G\text{-}(E)_n \qquad \text{II}$$

worin E für -OH, $-NH_2$ und/oder -NHR (worin R eine Alkylgruppe mit 1 bis 4 Kohlenstoffatomen darstellt) und n für 2 oder 3 stehen und G eine aliphatische, cycloaliphatische und/oder aromatische Gruppe darstellt und weitere Umsetzung des so erhaltenen Reaktionsproduktes mit Verbindungen der Formel III

$$Z\text{-}Q \qquad \text{III}$$

worin Q für -OH, $-NH_2$, -NHR (wobei R für eine Alkylgruppe mit 1 bis 4 Kohlenstoffatomen steht) oder -SH steht und Z eine Gruppe bedeutet, die mindestens eine stickstoffhaltige basische Gruppe enthält, erhalten werden.

Sowohl im Falle der Technologie der US-PS 4 029 681, 4 032 698, 4 048 207 und 4 070 388, d.h. z.B. Vordispergierung der Pigmente mit größeren Mengen des Additivs (bis 50%) und dann Zusatz zum Lacksystem, als auch bei Additiven für den zweiten genannten Weg wurden je nach eingesetztem Pigment und verwendetem Bindemittelsystem Lacke erhalten, die wegen Ausschaltung der Flokkung zu Lackierungen mit hohem Glanz und teilweise höherer Farbstärke führen bei gutem Viskositätsverhalten, die sich deutlich von Lackierungen ohne Benutzung des Additivs unterscheiden. Dieser positive Effekt gilt nicht generell für alle Pigmente und Lacksysteme bzw. Pigment-Bindemittelkombinationen.

So wird in einer ganzen Reihe von Fällen keine Verbesserung erreicht bzw. der gegenteilige Effekt beobachtet.

Des weiteren muß bei diesen Technologien die Art und Menge des Additivs für das jeweilige Pigment und Bindemittelsystem empirisch ermittelt werden, da nur bei Einhaltung der spezifisch benötigten Menge, die zwischen 5 und 50% schwanken kann, ein optimales Ergebnis erzielt wird. Insbesondere bei Pigmentmischungen, wie sie bei der Farblackherstellung üblich sind, kann dies zu erheblichen coloristischen Problemen führen.

So positiv die Wirkung der polymeren Urethanharze, z.B. der in EP-A-0 154 678 vorgeschlagene Weg, zur Herstellung rheologisch hochwertiger Lacke ist,

so bringt diese Art der Verwendung doch auch Nachteile für die Praxis mit sich.

Der Zusatz von bis zu 20% Additiv bei der Lackkonditionierung, wie er z.B. bei handelsüblichen Lackadditiven dieser Art empfohlen wird, führt zu einer deutlichen Erhöhung des Lösemittelanteils im Lacksystem und läuft damit dem Trend bei der Neuentwicklung von Lacksystemen, wie drastischer Reduzierung der Lösemittelmenge im Lack, entgegen.

Außerdem sprechen einige Handelspigmente, wie schon oben erwähnt, auf diese Additive nicht an, was insbesondere bei Verwendung von Pigmentgemischen bei der Lackherstellung in Kombination mit dem Additiv zu Störungen führen kann. Des weiteren wurden Unverträglichkeiten mit Pigmenten, die bereits oberflächenbehandelt sind, beobachtet.

Als besonders problematisch erwies sich das Aufbringen dieser Additive auf Pigmente in Suspension während bzw. nach der Herstellung.

Es besteht daher der Bedarf, Pulverpigmente einer Qualität zu entwickeln, bei denen für die Erreichung optimaler rheologischer Eigenschaften, vor allem auch in modernen Lacksystemen, wie «TSA-NAD» und «high solids», bei der Lackkonditionierung keine weiteren Additive mehr benötigt werden.

Es wurde nun gefunden, daß es gelingt Pulverpigmente, die mindestens 5% unsubstituiertes Chinacridon enthalten, mit verbesserten rheologischen Eigenschaften für die Verwendung in plastischen Massen, insbesondere in konventionallen Lacksystemen oder modernen Lacksystemen vom Typ «high solids» auf Basis Alkyd/Melamin, Acryl/Melamin, Acrylat/Isocyanat oder Polyester/Isocyanat, herzustellen, indem man die Basispigmente während der Pigmentformierung — ggf. vor, während oder nach dem Finish — mit 1 - 20 Gew.-% der Wirksubstanz von Additiven beschichtet, die aus folgenden Komponenten synthetisiert werden.

Polyisocyanate, die noch freie Isocyanatgruppen enthalten, auf Basis Toluylendiisocyanat (wie beispielsweise [R]Desmodur IL der Firma Bayer AG) oder Hexamethylendiisocyanat oder deren Gemische werden mit folgenden Verbindungen nacheinander bzw. mit einem Gemisch aus ihnen umgesetzt bis keine Isocyanatgruppen mehr nachweisbar sind:

1. Aliphatischen Mono- oder Poly-(Hydroxycarbonsäure)-alkyl $C_1$-$C_{20}$-estern (Polymerisationsgrad 2 - 50), wie z.B. der Polyester aus 1 Mol Decanol und 7 Mol ε-Caprolacton.

2. Polyethylenglykolen (Molgewicht 500 - 1500) und

3. 5- oder 6gliedrigen gesättigten oder ungesättigten Heterocyclen, die mindestens ein Stickstoffatom im Ringsystem haben und eine Gruppe tragen, die mit Isocyanaten reagieren kann und mit der allgemeinen Formel

$$H\text{-}R_1\text{-}R_2\text{-}R_3 \qquad (I)$$

zusammengefaßt werden können.

In dieser Formel steht $R_1$ für -O- oder -NH-, $R_2$ für eine Alkylengruppe mit 1-6 Kohlenstoffatomen, und $R_3$ für ein 5- oder 6gliedriges, gesättigtes oder ungesättigtes, Stickstoffatome enthaltendes heterocyclisches Ringsystem.

Beispiele für die Verbindungen der genannten Formel(I) sind 1-(2-Hydroxyethyl)-pyrrolidin, 2-(1-Pyrrolidyl)-ethylamin, 1-(2-Hydroxyethyl)-piperidin, 2--(1- Piperidyl)-ethylamin, 1-(2-Aminopropyl)-piperidin, 4-(2-Hydroxyethyl)-morpholin, 2-(4-Morpholinyl)-ethylamin, 4-(3-Aminopropyl)-morpholin, 1-(2--Hydroxyethyl)-piperazin, 1-(2-Aminoethyl)-piperazin, 1-(2-Hydroxyethyl)-2-alkyl-imidazoline, 1-(3--Aminopropyl)-imidazol, 1-(3-Hydroxypropyl)-imidazol, (2-Aminoethyl)-pyridin, (2-Hydroxyethyl)-pyridin, (3-Hydroxypropyl)-pyridin, (2-Hydroxymethyl)-pyridin und N-Methyl-2-hydroxymethyl-piperidin.

Die Umsetzungen werden in an sich bekannter Weise ausgeführt, wie z.B. in US-PS 4 032 698, EP-A-0 154 678 oder Patentanmeldung P 3 446 084.5. Die Umsetzungen werden in inerten Lösemitteln durchgeführt; üblicherweise werden Lösemittel wie Kohlenwasserstoffe und Ether, Ester, Ketone und Säureamide verwendet.

Bei der Verwendung der Additionsprodukte als Lackadditive bei der Lackkonditionierung ist diese Art von Lösemitteln sehr erwünscht, da diese Art Lösemittel auch im Lacksystem vorliegen.

Für eine Anwendung in wäßrigen Systemen ist diese Art Lösemittel weniger geeignet.

Für diese Anwendung ist es sinnvoller, die Reaktion in mit Wasser mindestens teilweise mischbaren inerten Lösemitteln durchzuführen, z.B. solchen, wie in der Patentanmeldung P 3 446 084.5 genannt.

Von Vorteil kann es außerdem sein, die Additionsreaktionen bei höheren Temperaturen sehr konzentriert durchzuführen und nach beendeter Reaktion mit wassermischbaren Lösemitteln zu verdünnen.

Die vorliegende Erfindung betrifft im einzelnen Pulverpigmente mit einem Gehalt von mindestens 5% unsubstituiertem Chinacridon mit verbesserten rheologischen Eigenschaften für die Einfärbung von polymeren Materialien, insbesondere Lacksystemen, auf die vor, während oder nach dem Finish 1 - 20 Gew.% der Wirksubstanz der erfindungsgemäßen Additive aufgebracht wurden, das Verfahren zur Herstellung der beschichteten Pigmente und ihre Verwendung.

Es war nicht zu erwarten, daß das Ergebnis der Erfindung bei Abwesenheit von Lackbindemitteln ohne Anwendung von mechanischen Scherkräften, wie beim Additivzusatz im Lack, erzielt werden kann, wenn man bei der Pigmentherstellung und zwar vor, während oder nach dem Finish in wäßriger Suspension, die neben dem Pigment noch zumindest teilweise wassermischbare Lösemittel enthält, das harzartige Additiv zusetzt, was aber nicht ausschließt, daß man die Pigmentsuspension — ggf. vor, während oder nach dem Finish — bei der Präparierung Scherkräften aussetzt.

Es war ferner nicht zu erwarten, daß es gelingt, den gleichen maximalen Effekt bei der Applizierung des Urethanharzes in der Pigmentsuspension — ggf. vor, während oder nach dem Finish — zu erreichen, da Harzteile, die nicht an der Pigmentoberfläche absorbiert sind, bei der Trocknung des Pigmentpulvers als gröbere Anteile vorliegen, die bei der Lackkonditionierung bekanntlich nur sehr schwer in Lösung gehen und den gewünschten Effekt stören würden, wie

es in der Tat bei rein mechanischen Mischungen auftritt.

Überraschenderweise wurde gefunden, daß durch geeignete Beschichtung mit den oben genannten Additiven der Polyurethanreihe nicht nur rheologische einwandfreie Pigmente erhalten werden, sondern daß die Menge des Additivs gegenüber der Anwendung bei der Lackkonditionierung drastisch verringert werden kann.

So wird z.B. bei der γ-Modifikation des unsubstituierten Chinacridons schon bei der Beschichtung mit einer geringen Konzentration der Wirksubstanz des Additivs — wie in Beispiel 1 genannt — eine rheologisch einwandfreie Lackierung erhalten.

Wird das Additiv bei der Lackkonditionierung zugesetzt, so muß zur Erzielung eines vergleichbaren Effekts mehr als die doppelte Konzentration des Additivs eingesetzt werden.

Außerdem zeigt das bei der Herstellung beschichtete Pigment eine deutlich höhere Farbstärke.

Der Vorteil der erfindungsgemäßen Arbeitsweise unter Beibehaltung des optimalen coloristischen und rheologischen Effekts ist darin zu erblicken, daß kein zusätzliches Lösemittel in das Lacksystem eingeschleppt wird, die Menge an Additiv drastisch verringert wird, das Aufbringen in wäßriger Phase möglich ist und die Wirksubstanz auf der Oberfläche der Pigmente fest adsorbiert wird und nicht in Wechselwirkung mit anderen Pigmenten während der Lackkonditionierung treten kann und daß im Lack keine Stippen auftreten.

Die erfindungsgemäßen Pulverpigmente, insbesondere Chinacridonpigmente sind solche, die zu mindestens 5 Gew.-% und bis zu 100% unsubstituiertes lineares trans-Chinacridon enthalten. Die Pigmentgemische können sowohl als Gemisch als auch vorzugsweise in der Form der Mischkristalle vorliegen.

Bevorzugte Pigmente des erfindungsgemäßen Verfahrens sind die β- und γ-Kristallmodifikationen des reinen unsubstituierten linearen trans-Chinacridons, Gemisch und Mischkristalle aus mindestens 5% unsubstituiertem Chinacridon und den folgenden Chinacridonen

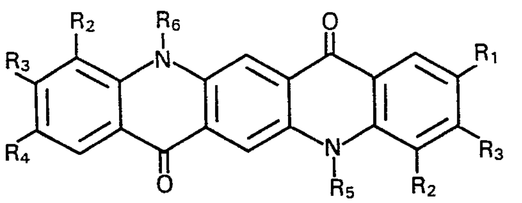

$R_1$ = H, Alkyl-$C_1$-$C_4$, Hal, -CON$R_7R_8$, Alkoxy-$C_1$-$C_4$
$R_2$ = H, Alkyl-$C_1$-$C_4$, Hal, -CON$R_7R_8$, Alkoxy-$C_1$-$C_4$
$R_3$ = H, Alkyl-$C_1$-$C_4$, Hal, -CON$R_7R_8$, Alkoxy-$C_1$-$C_4$
$R_4$ = H, Alkyl-$C_1$-$C_4$, Hal, -CON$R_7R_8$, Alkoxy-$C_1$-$C_4$
$R_5$ = H, Alkyl-$C_1$-$C_4$
$R_6$ = H, Alkyl-$C_1$-$C_4$
$R_7$ = H, Alkyl-$C_1$-$C_{12}$
$R_8$ = H, Alkyl-$C_1$-$C_3$

Ganz besonders bevorzugte Pigmente des erfindungsgemäßen Verfahrens sind die β- und γ-Modifikation des unsubstituierten Chinacridons und Mischkristalle aus 2,9-Dimethylchinacridon und unsubstituiertem Chinacridon.

Der nächstliegende Weg, die Wirksubstanz des Additivs zu isolieren und in fester Form mit dem Basispigment zu mischen, scheidet aus, da die Wirksubstanz im Rahmen der Lackherstellung im allgemeinen nicht voll in Lösung zu bringen ist. Damit wird nur ein geringer Effekt in Richtung Rheologieverbesserung erreicht und die nicht gelösten Harzteile stören das coloristische Bild.

Da die obengenannten Additive und auch die z.B. in EP-A-0 145 678 vorgeschlagenen Additive, bedingt durch die Herstellung in Lösemitteln vorliegen, die nicht oder nur zum Teil mit Wasser mischbar sind, kommt der Art und Weise der Aufbringung der Additive auf die Pigmente entscheidende Bedeutung zu.

Der Zusatz kann je nach Ausführung zur wäßrigen Pigmentsuspension, zur Pigmentsuspension in Wasser-Lösemittelgemischen oder zur Pigmentsuspension in Lösemitteln — ggf. vor, während oder nach dem Pigmentfinish — erfolgen.

So ist es bei einigen Pigmenten, insbesondere bei deckenden Pigmenten hoher Qualität möglich, das gelöste Additiv in seiner Herstellungsform in die lösemittelfreie Basispigmentsuspension, die im Rahmen der Herstellung anfällt, einzurühren. Nach beendetem Aufziehen des Additivs auf das Basispigment kann das Additivlösemittel durch Destillation abgetrennt werden.

Sofern das Lösemittel des Additivs bei der Applizierung zur Pigmentsuspension zu unerwünschten coloristischen Veränderungen des Pigments oder zu technischen Schwierigkeiten führt, ist es vorteilhaft, das Additiv in einem Lösemittel anzuwenden, das auch für den Finish geeignet ist oder verwendet wird.

Für das erfindungsgemäße Verfahren geeignete Lösemittel sind vorzugsweise solche, die mit Wasser mindestens teilweise mischbar sind, wie beispielsweise aliphatische Alkohole mit 1-6 Kohlenstoffatomen, wie beispielsweise Ethanol, Propanol, Isobutanol oder Amylalkohol; Glykole, Glykoläther und Glykolester, wie beispielsweise Ethylenglykol, Diethylenglykol, Propylenglykol, Glykolmonoethyl-$C_1$-$C_6$-äther, Diglykolmonoalkyl-$C_1$-$C_4$-äther, Diglykoldimethyläther, Ethylglykolacetat, Methylglykolacetat, Butylglykolacetat; Ketone der allgemeinen Formel Alkyl-$C_1$-$C_4$-$\underset{\underset{O}{\|}}{C}$-Alkyl-$C_1$-$C_4$, wie beispielsweise Aceton, Methyl-ethylketon, Methyl-isobutylketon oder Diacetonalkohol [4-Methyl-4-hydroxy-pentanon-(2)]; aliphatische Carbonsäuren von 1-4 Kohlenstoffatomen, wie beispielsweise Ameisensäure-, Essig- oder Propionsäure; aliphatische Carbonsäureamide von 1-5 Kohlenstoffatomen, wie beispielsweise Dimethylformamid; cyclische Carbonsäureamide, wie beispielsweise N-Methylpyrrolidon.

Die Verwendung der genannten Lösemittel ist vor allem im Zusammenhang mit der thermischen Nachbehandlung eines Pigments — etwa zur Erhöhung seiner Deckkraft oder zur Verbesserung anderer anwendungstechnischer Eigenschaften — zu empfehlen. Zweckmäßigerweise wählt man dabei das Lösemittel aus, in welchem die thermische Nachbehandlung des Pigments durchgeführt wird. Die Zugabe

des Additivs oder seiner Lösung kann auch vor, während oder nach einem Finish erfolgen. Das Lösemittel läßt sich anschließend, etwa durch Wasserdampf, rasch und quantitativ abtreiben, und das Pigment kann anschließend aus der zurückbleibenden wäßrigen Suspension isoliert werden.

Das Aufbringen der Wirksubstanz in einem der genannten Lösemittel kann auch ohne vorausgegangene oder nachfolgende thermische Behandlung (Finish) des Pigments erfolgen, indem unmittelbar nach Zugabe der Additivlösung zur wäßrigen Pigmentsuspension unter intensivem Rühren das verwendete Lösemittel etwa mit Wasserdampf wieder abdestilliert wird.

Ist das Additiv in einem solchen Lösemittel nicht verfügbar, so ist die Wirksubstanz des Additivs in eine anwendbare, für das jeweilige Pigment geeignete Form zu überführen, d.h. die Wirksubstanz zu isolieren und in einem geeigneten Lösemittel für die Präparierung zu lösen. Zur Überführung der Wirksubstanz des Additivs in eine für das erfindungsgemäße Verfahren geeignete Form gibt es verschiedene Methoden:

1. Zur Isolierung der Wirksubstanz des Additivs kann bei reduziertem Druck das Lösemittel abdestilliert werden und die zurückbleibende Wirksubstanz in einem für die Präparierung geeigneten Lösemittel, wie beispielsweise niederen aliphatischen Carbonsäuren, Ketonen, Alkoholen oder Estern, gelöst werden.

2. Eine weitere, sehr breit anwendungsfähige, bevorzugte Methode besteht darin, daß man das Lösemittel, in welchem das Additiv gelöst ist, nach Zusatz von höher siedenden, für die Präparierung geeigneten Lösemitteln, wie beispielsweise aliphatischen Carbonsäuren, Glykolen oder Glykolacetaten, aus dem Additiv abdestilliert und damit die Wirksubstanz des Additivs in eine für die Anwendung geeignete gelöste Form bringt. Dabei ist es von Vorteil, die Destillation bei reduziertem Druck vorzunehmen und in Gegenwart geringer Mengen Wasser das Lösemittel azeotrop abzudestillieren.

Für die spätere erfindungsgemäße Anwendung der Wirksubstanz des Additivs ist es von Vorteil, wenn das organische Lösemittel, in welchem nach diesen Maßnahmen die Wirksubstanz des Additivs gelöst wird, zumindest teilweise wasserlöslich ist, weil dadurch das Additiv in wäßrigen Pigmentsuspensionen in einfacher Weise aufgebracht werden kann. Die Verwendung von organischen Carbonsäuren empfiehlt sich besonders, da die beanspruchten Additive schwach basischen Charakter haben. In diesen Fällen kann es dann von Vorteil sein, nach der Präparierung die organische Säure zu neutralisieren bzw. die Pigmentsuspension schwach alkalisch zu stellen.

Es kann weiterhin von Vorteil sein, die basischen Gruppen der erfindungsgemässen Additive mit äquivalenten Mengen anionischer Hilfsmittel, wie z.B. Alkylphenylpolyglykoläthersulfaten, Harzseifen oder Sulfobernsteinsäureestern zu neutralisieren.

Der Zusatz dieser Hilfsmittel kann jeweils vor, während oder nach dem Finish erfolgen. Es ist aber nicht erforderlich, Additiv und Hilfsmittel in der gleichen Stufe der Pigmentformierung zuzusetzen.

Die erfindungsgemäß präparierten Pulverpigmente zeigen in allen Lacksystemen, vor allem aber in den üblicherweise schwer pigmentierbaren Systemen, wie «TSA-NAD» und «high-solids», einwandfreie rheologische Eigenschaften, wie deutlich verbessertes Glanz-, Viskositäts- und Flockulationsverhalten.

Das erfindungsgemäße Verfahren wird durch die nachstehenden Beispiele näher erläutert. Die angegebenen Teile und Prozentangaben beziehen sich hierbei auf das Gewicht.

*Beispiel 1*

In einem Rührgefäß werden 200 Teile einer wäßrigen Pigmentsuspension eines Pigmentgehalts von 6-7% der deckenden γ-Modifikation von C.I. Pigment Violet 19 (73900), wie sie nach dem Finish erhalten wird, unter Rühren auf 50°C geheizt und bei dieser Temperatur mit 3,5 Teilen eines Additivs, dessen Herstellung im Beispiel E beschrieben wird, langsam versetzt. Nach 3stündigem Nachrühren bei 50°C wird mit verdünnter Natronlauge auf pH 8 gestellt und eine weitere Stunde bei 50°C gerührt. Danach wird das Additivlösemittel mit Wasserdampf abdestilliert, das Pigment abfiltriert, mit Wasser gewaschen und anschließend getrocknet. Die Pigmentausbeute beträgt mindestens 98% det Theorie.

Das auf diese Weise hergestellte blaustichig rote Pigment ist das lineare trans-Chinacridon in hochkristalliner γ-Modifikation. Es zeichnet sich durch hervorragende rheologische Eigenschaften aus; die mit ihm hergestellten hochdeckenden Volltonlackierungen zeigen einen schleierfreien klaren Farbton und einen ganz hervorragenden Glanz.

Zum Vergleich wurde ein Pigment unter sonst gleichen Bedingungen, aber ohne Zusatz von Additif, hergestellt.

Die Vergleichsfärbung ist in den Volltonlackierungen deutlich matter mit milchigem Schleier und die Viskosität in «high solids» ist deutlich schlechter. Zum Vergleich der Glanzwerte wurden die im Ofen eingebrannten Volltonfolienaufgüsse von unter gleichen Bedingungen hergestellten 7%igen «TSA-NAD»-Lacken, die vor dem Aufguß auf eine Viskosität von 20 Sekunden (gemessen im Fordbecher ∅ 4 mm) mit Lacklösemitteln eingestellt wurden, mit dem Glanzmessgerät Hunterlab D48D unter einem Winkel von 20° gemessen, wobei folgende Werte abgelesen wurden:

Pigment nach Beispiel 1: 81,5
Vergleichsbeispiel: 31,8

*Beispiel 2*

Verfährt man wie in Beispiel 1 beschrieben, setzt aber an Stelle des dort genannten Additivs 3,9 Teile des nach Beispiel A erhaltenen Additivs ein und isoliert dann das Pigment ohne vorher zu destillieren, so erhält man ebenfalls ein vergleichbares Ergebnis.

Glanzwert: 80,5

*Beispiel 3*

500 Teile einer wäßrig-isobutanolischen Pigmentsuspension (Isobutanolgehalt 20%) mit einem Pigmentgehalt von 6,5% der deckenden γ-Modifikation von C.I. Pigment Violet 19, wie sie nach dem Finish erhalten wird, werden unter Rühren auf 50°C

geheizt und bei dieser Temperatur in 30 Minuten mit einer Lösung aus 6 Teilen Additiv-Lösung (22%ig) [hergestellt gemäß Beispiel K)] und 12 Teilen Isobutanol 100%ig versetzt. Anschließend wird 3 Stunden bei 50°C nachgerührt, mit verdünnter Natronlauge auf pH 7,5 gestellt und noch 2 Stunden bei 50°C verrührt. Danach wird das Isobutanol mit Wasserdampf abdestilliert, das Pigment abfiltriert, mit Wasser gewaschen und bei 80°C getrocknet. Das mit einer Ausbeute von über 98% erhaltene blaustichig rote Pigment zeigt im «TSA-NAD»-System eine hochdeckende schleierfreie Volltonlackierung, einen ausgezeichneten Glanz und hervorragende Viskosität. Bei der Glanzmessung gemäß Beispiel 1 wurde ein Wert von 88,8 ermittelt. Demgegenüber zeigt der unpräparierte Vergleich einen Glanzwert von 31,8.

*Beispiel 4*

a) 500 Teile einer 6%igen wäßrigen Suspension der β-Kristallmodifikation von C.I. Pigment Violet 19 (73900) werden bei 70°C unter Rühren langsam mit 13,6 Teilen der nach Beispiel I erhaltenen Additivlösung versetzt. Anschließend wird 5 Stunden bei 70°C verrührt, auf pH 8 mit wäßriger Natronlauge gestellt, 1 Stunde bei 70°C nachgerührt, das Pigment isoliert und bei 80°C getrocknet. Es wird die β-Kristallmodifikation des linearen trans-Chinacridons mit hervorragenden rheologischen Eigenschaften erhalten.

Die Glanzmessung als Grad für Flockulation der rot-violetten, schleierfreien Volltonlackierung auf Folie gemäß Beispiel 1 ergab einen Glanzwert von 89,5 gegenüber dem Wert von 79 beim unpräparierten Vergleich.

b) Setzt man als Additiv 13,6 Teile des nach Beispiel La erhaltenen Additivs ein und arbeitet im übrigen wie in Beispiel 4a beschrieben, so erhält man ein rotviolettes Pigment mit vergleichbaren Eigenschaften.

Glanzwert: 91.

*Beispiel 5*

100 Teile einer 6%igen wäßrig-alkoholischen Suspension (Ethanolgehalt 10%) der β-Kristallmodifikation von C.I. Pigment Violet 19 (73900) werden unter Rühren bei Raumtemperatur mit einer Lösung aus 2,7 Teilen des nach Beispiel K erhaltenen Additivs und 8,1 Teilen Ethanol versetzt und 12 Stunden bei Raumtemperatur verrührt. Anschließend wird mit verdünnter Natronlauge auf pH 9,5 gestellt, 3 Stunden nachgerührt, abgesaugt, mit Wasser gewaschen und getrocknet.

Die schleierfreie rotviolette Volltonlackierung zeigt hervorragenden Glanz. Die Glanzmessung auf Folie gemäß Beispiel 1 zeigt einen Wert von 90,5.

*Beispiel 6*

Zu 200 Teilen einer wäßrig-isobutanolischen Chinacridonsuspension (Isobutanolgehalt 30%, Pigmentgehalt 8,8% Chinacridonmischkristall aus 3 Teilen 2,9-Dimethylchinacridon und 1 Teil unsubstituiertem Chinacridon im Gitter des 2,9-Dimethylchinacridons) werden bei 50°C in 30 Minuten 20,4 Teile einer Lösung, bestehend aus 6,8 Teilen Additiv-Lösung 22%ig (gemäß Beispiel K) und 13,6 Teilen Isobutanol getropft. Dann wird 3 Stunden bei 50°C gerührt und anschließend mit verdünnter Natronlauge auf pH 8,5 gestellt und 2 Stunden bei 50°C gerührt. Danach wird mit Wasserdampf das Isobutanol abdestilliert, das Pigment abfiltriert, mit Wasser gewaschen und getrocknet.

Das Pigment, ein leuchtendes Magenta, zeigt eine hochtransparente rheologisch nahezu einwandfreie Lackierung im Alkyd-Melaminharzlacksystem, in Acryl-Melaminharzlacksystemen und in TSA-NAD-Systemen.

| | |
|---|---|
| Glanzwert wie in Beispiel 1 gemessen: | 80,5 |
| Vergleich unpräpariert: | 49 |

*Beispiel 7*

1000 Teile einer wäßrig-isobutanolischen Pigmentsuspension (Isobutanolgehalt 40%, Pigmentgehalt 6%) der γ-Kristallmodifikation von C.I. Pigment Violet 19 werden bei Siedetemperatur mit einer Lösung aus 10,76 Teilen des nach Beispiel I erhaltenen Additivs und 22 Teilen Isobutanol 100% versetzt und dann 3 Stunden bei Siedetemperatur verrührt. Anschließend wird mit verdünnter Natronlauge auf pH 7,5 gestellt, 2 Stunden nachgerührt, das Isobutanol mit Wasserdampf abdestilliert, das Pigment abfiltriert, mit Wasser gewaschen und getrocknet. Es werden 62 Teilen eines blaustichig roten Pigmentpulvers erhalten.

Die Glanzmessung auf Folie, wie in Beispiel 1 beschrieben, ergab einen Glanzwert von 88.

*Beispiel 8*

2000 Teile einer Pigmentsuspension (Isobutanolgehalt 50%), die 176 Teile einer festen Lösung aus 2,9-Dimethylchinacridon und unsubstituiertem Chinacridon im Verhältnis 9:1 enthält, werden bei 50°C unter Rühren mit einer Lösung aus 80 Teilen Additivlösung (22%ig) (hergestellt nach Beispiel I) und 160 Teilen Isobutanol 100% innerhalb 30 Minuten versetzt. Anschließend wird 3 Stunden bei Siedetemperatur gerührt, dann mit verdünnter Natronlauge auf pH 8-8,5 gestellt und weitere 2 Stunden gekocht. Danach wird das Isobutanol mit Wasserdampf abdestilliert, das Pigment abfiltriert, mit Wasser gewaschen und bei 80°C getrocknet. Das mit einer Ausbeute von 98,5% erhaltene Magenta-Pigment zeigt im «TSA-NAD» eine transparente, schleierfreie Volltonlackierung mit hohem Glanz und guter Viskosität.

| | |
|---|---|
| Glanzmessung gemäß Beispiel 1: | 78,3 |
| unbehandelter Vergleich: | 42,7 |

*Beispiel 9*

500 Teile einer wäßrig-isobutanolischen Pigmentsuspension (Isobutanolgehalt 35%, Pigmentgehalt 7,5% eines Pigmentgemisches aus 8 Teilen unsubstituiertem Chinacridon und 1 Teil 2,9-Di-N-methyl-carbamoylchinacridon) werden bei 80°C unter Rühren mit 125 Teilen einer 3,6% Additivlösung, hergestellt nach Beispiel H, versetzt und 4 Stunden gekocht. Danach wird das Isobutanol abdestilliert und das Pigment isoliert.

| | |
|---|---|
| Glanzwert der blaustichigroten Volltonlackierung gemäß Beispiel 1: | 81,2 |
| Vergleich unpräpariert: | 28 |

*Beispiel 10*

Verfährt man, wie in Beispiel 9 beschrieben, setzt aber statt des dort verwendeten Additivs 25 Teile des Additivs, das nach Beispiel M erhalten wurde, verdünnt mit 25 Teilen Diethylenglykolmonoethyläther ein, so erhält man ein vergleichbares Ergebnis.

*Beispiel 11*

Zu 500 Teilen einer wäßrig-alkoholischen Pigmentsuspension (Ethanolgehalt 40%), die ein Pigment enthält, das aus 8 Teilen unsubstituiertem Chinacridon und 1 Teil 4,11-Difluorchinacridon besteht, werden bei Raumtemperatur in 2 Stunden 22,5 Teile einer Lösung eines 20%igen Additivs, das gemäss Beispiel D und durch anschließende Überführung in die Propionsäurelösung nach Beispiel I erhalten wurde, vermischt mit 45 Teilen Ethylalkohol, getropft. Anschließend wird 16 Stunden bei 25-30°C gerührt, dann mit verdünnter Natronlauge auf pH 8,5 gestellt, zum Sieden erhitzt und 2 Stunden gekocht. Danach wird der Ethylalkohol abdestilliert, das Pigment abfiltriert, mit Wasser salzfrei gewaschen und getrocknet. Es werden 48 Teile eines scharlachroten Pigmentpulvers erhalten. Die Glanzmessung auf Folie, wie in Beispiel 1 beschrieben, ergab einen Glanzwert von 85. Der unpräparierte Vergleich einen Glanzwert von 41.

*Beispiel 12*

500 Teile eines feuchten Rohchinacridongemisches (Feststoffgehalt 18,5%) aus 70% Dimethylchinacridon und 30% unsubstituiertem Chinacridon werden in 1000 Teilen Isobutanol suspendiert und 30 Minuten bei 50°C verrührt. Dann werden 45 Teile Additiv 21,8%ig (hergestellt nach Beispiel Lc), verdünnt mit 90 Teilen Isobutanol, in 20 Minuten zugesetzt. Anschließend wird zum Sieden erhitzt und 5 Stunden am Rückfluß gekocht, wobei ca. 200 Teile der wäßrigen Phase des Azeotrops (Isobutanolgehalt ca. 8-9%) abgetrennt werden. Danach wird mit verdünnter Natronlauge die Propionsäure neutralisiert, noch 2 Stunden gekocht, das Isobutanol mit Wasserdampft abdestilliert und das Pigment abfiltriert. Das abfiltrierte Pigment wird mit Wasser salzfrei gewaschen und getrocknet.

Das Pigment, ein leuchtendes Magenta, zeigt eine transparente, rheologisch nahezu einwandfreie Lackierung in den obengenannten Lacksystemen.

| | |
|---|---|
| Glanzwert wie in Beispiel 1 gemessen: | 82 |
| Vergleich unpräpariert: | 53 |

*Beispiel 13*

Zu 200 Teilen einer wäßrig-isobutanolischen Chinacridonsuspension (Isobutanolgehalt 30%, Pigmentgehalt 7,5% Chinacridongemisch aus 2 Teilen 2,9-Dimethylchinacridon und 8 Teilen unsubstituiertem Chinacridon) werden bei 50°C in 30 Minuten 20,4 Teile einer Lösung, bestehend aus 6,8 Teilen Additiv-Lösung 22%ig (gemäß Beispiel Lb) und 13,6 Teilen Isobutanol getropft. Dann wird 3 Stunden bei 50°C gerührt und anschließend mit verdünnter Natronlauge auf pH 8,5 gestellt und 2 Stunden bei 50°C gerührt. Danach wird mit Wasserdampf das Isobutanol abdestilliert, das Pigment abfiltriert, mit Wasser gewaschen und getrocknet. Das Pigment, ein leuchtendes blaustichiges Rot, zeigt eine transparente einwandfreie Lackierung im Alkyd-Melaminharzlacksystem, in Acryl-Melaminharzlacksystemen und in TSA-NAD-Systemen.

| | |
|---|---|
| Glanzwert wie in Beispiel 1 gemessen: | 83 |
| Vergleich unpräpariert: | 53 |

*Beispiel 14*

Zu 200 Teilen einer wäßrig-isobutanolischen Chinacridonsuspension (Isobutanolgehalt 30%, Pigmentgehalt 8% Chinacridon aus 1 Teil 2,9-Dimethoxychinacridon und 9 Teilen unsubstituiertem Chinacridon) werden bei 50°C in 30 Minuten 26,5 Teile einer Lösung, bestehend aus 6,5 Teilen Additiv-Lösung 22%ig (gemäß Beispiel 9) und 20 Teilen Isobutanol getropft. Dann wird 5 Stunden bei 75°C gerührt und anschließend mit verdünnter Natronlauge auf pH 8,5 gestellt und 2 Stunden bei 75°C gerührt. Danach wird mit Wasserdampf das Isobutanol abdestilliert, das Pigment abfiltriert, mit Wasser gewaschen und getrocknet. Das Pigment, ein leuchtendes stark blaustichiges Rot, zeigt eine transparente einwandfreie Lackierung im Alkyd-Melaminharzlacksystem, in Acryl-Melaminharzlacksystemen und in TSA-NAD-Systemen.

| | |
|---|---|
| Glanzwert wie in Beispiel 1 gemessen: | 85 |
| Vergleich unpräpariert: | 43 |

*Beispiel A*

In einem Rührgefäß werden 31,5 Teile einer 50%igen Lösung eines Polyisocyanurates der idealisierten Struktur der nachstehenden Formel

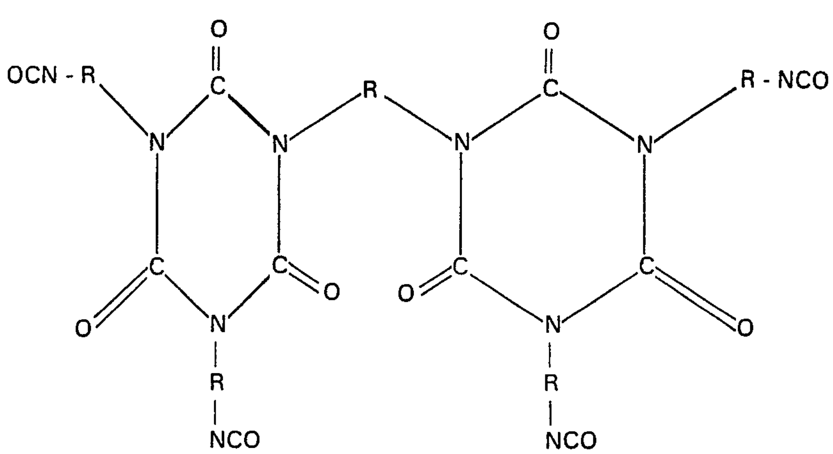

(IV)

in welcher R den Toluylenrest bedeutet, 31,5 Teile Ethylglykolacetat sowie 0,04 Teile Dibutylzinndilaurat vorgelegt und auf 50°C erwärmt. 19,1 Teile eines Polyesters aus 1 Mol Decanol und 7 Mol ε-Caprolacton, gelöst in 19,1 Teilen Ethylbenzol, werden rasch zugegeben und 1 Stunde bei 80°C gerührt. Der NCO-Gehalt verringert sich dabei von 2,4% zu Beginn der ersten Teilreaktion auf 1,6%.

In einem zweiten Reaktionsgefäß werden 8 Teile eines Polyethylenglykols (mittleres Molgewicht 1000) und 3,75 Teile N-(3-Aminopropyl)-imidazol in 73,5 Teilen Xylol bei 50°C gelöst. Innerhalb von 30 Minuten wird das Reaktionsprodukt der ersten Reaktionsstufe zugetropft und der Ansatz noch 2 Stunden bei 80°C gerührt. Man erhält ein fast klares, farbloses, niedrigviskoses Produkt mit einem Feststoffgehalt von 25%, das im IR-Spektrum keine NCO-Bande mehr aufweist. Mittleres Molgewicht des Feststoffes: 6300.

*Beispiel B*

Ersetzt man in Beispiel A das dort eingesetzte 1-(3-Aminopropyl)-imidazol durch die äquivalente Menge 1-(3-Hydroxypropyl)-imidazol, so erhält man bei sonst gleicher Arbeitsweise ein farbloses, ebenfalls niedrigviskoses Produkt mit einem Feststoffgehalt von ca. 25%, das im IR-Spektrum keine NCO-Bande mehr aufweist.

Mittleres Molgewicht des Feststoffes: 6200

*Beispiel C*

Verfährt man, wie in Beispiel A beschrieben, setzt aber statt 1-(3-Aminopropyl)-imidazol die äquivalente Menge 4-(3-Amino-propyl)-morpholin ein, so erhält man ein polymeres, ebenfalls niedrigviskoses Produkt, bei dem im IR-Spektrum keine NCO-Bande mehr zu erkennen ist.

*Beispiel D*

Ersetzt man im Beispiel A das dort eingesetzte Polyethylenglykol durch ein Polyethylenglykol eines mittleren Molgewichts von 600, so erhält man bei sonst gleicher Arbeitsweise ein vergleichbares Produkt.

*Beispiel E*

In einem Reaktionsgefäß werden 10 Teile Diglykoldimethylether, 24 Teile einer 60%igen Lösung eines Polyisocyanates, dessen idealisierte Struktur in Beispiel A angegeben ist und bei welchem in der genannten Formel IV R für den Toluylen- bzw. Hexamethylenrest im Verhältnis 3:2 steht, und 0,03 Teile Dibutylzinndilaurat vorgelegt und auf 50°C erwärmt. Innerhalb von 10 Minuten werden 19,1 Teile eines Polyesters aus 1 Mol Decanol und 7 Mol ε-Caprolacton in 19,1 Teilen Diglykoldimethylether zugetropft. Nach einer Reaktionszeit von 2 Stunden bei 80°C fällt der NCO-Gehalt von 3,45% zu Beginn der Reaktion auf 2,3%. In einem zweiten Reaktionsgefäß werden 8 Teile eines Polyethylenglykols (mittleres Molgewicht 1000) und 3,75 Teile N-(3-Aminopropyl)-imidazol in 28,25 Teilen Diglykoldimethylether gelöst. In diese Lösung wird bei 50°C innerhalb von 30 Minuten das Reaktionsprodukt der ersten Reaktionsstufe gegeben und der Ansatz noch 2 Stunden bei 80°C gerührt. Man erhält ein fast klares, farbloses, gut fließfähiges Produkt mit einem Feststoffgehalt von 36,5%, das im IR-Spektrum keine NCO-Gruppen mehr aufweist. Mittleres Molgewicht des Feststoffes: 5100.

*Beispiel F*

Verfährt man, wie in Beispiel E beschrieben, setzt aber statt des dort eingesetzten Polyethylenglykols die äquivalente Menge Polyethylenglykol — mittleres Molgewicht 1500 — ein, so erhält man ebenfalls ein polymeres Produkt, das keine NCO-Banden mehr aufweist.

*Beispiel G*

In einem Rührgefäß werden 31,5 Teile einer 50%igen Lösung in Butylacetat eines Polyisocyanurates der Formel (IV) (siehe Beispiel A) in welcher R den Toluylenrest bedeutet, 31,5 Teile Xylol sowie 0,04 Teile Dibutylzinndilaurat vorgelegt und auf 40-50°C erwärmt. Dann werden 19,1 Teile eines Polyesters aus 1 Mol Decanol und 7 Mol ε-Caprolacton, gelöst in 19,1 Teilen Xylol, zugesetzt und zur Additionsreaktion bei 40-50°C gerührt.

Nachdem sich der NCO-Gehalt um ca. 25% verringert hat, werden 8 Teile eines Polyethylenglykols (mittleres Molgewicht 1000) zugegeben und nachdem ca. insgesamt 50% umgesetzt sind, werden 3,75 Teile N-(3-Aminopropyl)-imidazol, gelöst in 41,4 Teilen Xylol zugesetzt und bei 60°C verrührt, bis keine NCO-Gruppen mehr nachweisbar sind. Es wird eine viskose, leicht bernsteinfarbene Flüssigkeit erhalten.

Feststoffgehalt ca. 30%.

*Beispiel H*

100 Teile Additiv (hergestellt nach Beispiel G) werden im Vakuum zur Trockne eingedampft. Das verbleibende Harz wird in 800 Teilen Isobutanol gelöst.

*Beispiel I*

200 Teile des nach Beispiel A erhaltenen Additivs werden unter Rühren mit 50 Teilen Wasser und 250 Teilen Propionsäure versetzt. Unter Rühren wird im Vakuum bei 40-60°C ein Lösemittel-Wasser-Gemisch abdestilliert bis im Sumpf kein Xylol mehr nachweisbar ist. Es resultiert eine 22%ige Lösung des Additivs in Propionsäure.

*Beispiel K*

200 Teile des Additivs 30%ig (hergestellt nach Beispiel G) werden unter Rühren mit 50 Teilen Wasser und 275 Teilen Propionsäure versetzt. Dann wird unter Rühren im Vakuum (15-20 mm Hg) bei 40-60°C ein Azeotrop aus Xylol, Butylacetat, Propionsäure und Wasser abdestilliert bis kein Xylol mehr im Destillationssumpf nachweisbar ist. Es resultiert eine ca. 20-25%ige Lösung des Additivs der Propionsäure.

*Beispiel La-d*

Verfährt man, wie in Beispiel I beschrieben, setzt aber jeweils 200 Teile der nach den Beispielen B, C, D und F hergestellten Additive ein, so erhält man die entsprechenden Propionsäurelösungen der Additive:

a) Propionsäurelösung des Additivs F
b) Propionsäurelösung des Additivs B
c) Propionsäurelösung des Additivs C
d) Propionsäurelösung des Additivs D

*Beispiel M*

200 Teile des Additivs (30%ig) (hergestellt nach Beispiel G) werden unter Rühren mit 380 Teilen Diethylenglykolmonoethyläther und 20 Teilen Wasser versetzt. Dann wird unter Rühren im Vakuum (ca. 70 mm Hg) Xylol, Butylacetat und Wasser abdestilliert bis kein Xylol mehr im Sumpf nachweisbar ist. Es resultiert eine ca. 15%ige Lösung des Additivs in Diethylenglykolmonoethylether.

**Patentansprüche**

1. Pulverpigmente, die mindestens 5% unsubstituiertes Chinacridon enthalten, mit verbesserten rheologischen Eigenschaften für die Verwendung in Lacksystemen auf Basis Alkyd/Melamin, Acryl/Melamin, Acrylat/Isocyanat oder Polyester/Isocyanat sowohl konventioneller Art als auch moderner Art vom Typ der «high solids», dadurch gekennzeichnet, daß auf diese — ggfs. vor, während oder nach einem Finish — 1 bis 20 Gew.-%, bezogen auf die nicht beschichteten Pulverpigmente, der Wirksubstanz eines Lackadditivs der Polyuethanreihe, hergestellt durch Umsetzung von Polyisocyanuraten, die noch freie Isocyanatgruppen tragen, auf Basis von Toluylendiisocyanat, Hexamethylendiisocyanat oder deren Gemischen mit (1) aliphatischen Mono- oder Poly-(hydroxycarbonsäure)-alkyl-$C_1$-$C_{20}$ -estern (Polymerisationsgrad 2 - 50), (2) Polyethylenglykolen (Molgewicht 500 - 1500) und (3) 5- oder 6gliedrigen, gesättigten oder ungesättigten Heterocyclen, die mindestens 1 Stickstoffatom im Ring enthalten und reaktionsfähige Amino- oder Hydroxyalkyl-$C_1$-$C_6$-gruppen enthalten, bis keine Isocyanatgruppen mehr nachweisbar sind, aufgebracht wurde(n).

2. Verfahren zur Herstellung von Pulverpigmenten, die mindestens 5% unsubstituiertes Chinacridon enthalten, mit verbesserten rheologischen Eigenschaften für die Verwendung in Lacksystemen auf Basis Alkyd/Melamin. Acryl/Melamin, Acryl/Isocyanat oder Polyester/Isocyanat sowohl konventioneller Art als auch moderner Art vom Typ der «high solids», dadurch gekennzeichnet, daß man die Basispigmente — ggfs. vor, während oder nach dem Finish — mit 1 bis 20 Gew.-% der Wirksubstanz eines Lackadditivs der Polyurethanreihe, hergestellt durch Umsetzung von Polyisocyanuraten, die noch freie Isocyanatgruppen tragen, auf Basis von Toluylendiisocyanat, Hexamethylendiisocyanat oder deren Gemischen mit (1) aliphatischen Mono- oder Poly(hydroxycarbonsäure)-alkyl-$C_1$-$C_{20}$-estern (Polymerisationsgrad 2 - 50), (2) Polyethylenglykolen (Molgewicht 500 - 1500) und (3) 5- oder 6gliedrigen, gesättigten oder ungesättigten Heterocyclen, die mindestens 1 Stickstoffatom im Ring enthalten und noch reaktionsfähige Amino- oder Hydroxy-alkyl-$C_1$-$C_6$-Gruppen tragen, bis keine Isocyanatgruppen mehr nachweisbar sind, behandelt.

3. Verfahren nach Anspruch 2, dadurch gekennzeichnet, daß die Wirksubstanz eines Lackadditivs der Polyurethanreihe, gelöst in einem organischen Lösemittel, das vorzugsweise mindestens teilweise mit Wasser mischbar ist, verwendet wird.

4. Verfahren nach Anspruch 3, dadurch gekennzeichnet, daß die Wirksubstanz eines Lackadditivs des Polyurethanreihe gelöst in einem aliphatischen Alkohol von 1-6 Kohlenstoffatomen, Glykol, Glykoläther, Glykolester, Keton der Formel Alkyl-$C_1$-$C_4$-C-Alkyl-$C_1$-$C_4$, einer aliphatischen Car-
||
O
bonsäure von 1-4 Kohlenstoffatomen, einem aliphatischen Carbonsäureamid von 1-5 Kohlenstoffatomen oder einem cyclischen Carbonsäureamid oder in Mischungen dieser Lösemittel verwendet wird.

5. Verfahren nach Anspruch 3, dadurch gekennzeichnet, daß die Wirksubstanz eines Lackadditivs der Polyurethanreihe, gelöst in Ethanol, Propanol, Isobutanol, Amylalkohol, Ethylenglykol, Diethylenglykol, Propylenglykol, Glykolmonoalkyl-$C_1$-$C_6$-äther, Diglykolmonoalkyl-$C_1$-$C_4$-äther, Diglykoldimethyläther, Ethylglykolacetat, Methylglykolacetat, Butyldiglykolacetat, Aceton, Methylethylketon, Methylisobutyl-keton, Diacetonalkohol, Ameisensäure, Essigsäure, Propionsäure, Dimethylformamid oder N-Methylpyrrolidon verwendet wird.

6. Verwendung der in Anspruch 1 beschriebenen Pulverpigmente zum Pigmentieren von polymeren Materialien.

7. Verwendung der in Anspruch 1 beschriebenen Pulverpigmente zum Einfärben von Lacksystemen.

**Claims**

1. A powdered pigment which contains at least 5% of unsubstituted quinacridone and has improved rheological properties for use in a paint system on an alkyd/melamine, acrylic/melamine, acrylate/isocyanate or polyester/isocyanate basis both of a conventional nature and of a modern nature of the «high solids» type, onto which — as appropriate before, during or after finishing — 1 to 20% by weight based on the uncoated powdered pigment, of the active substance of a paint additive of the polyurethane series, prepared by reacting polyisocyanurates which still carry free isocyanate groups and are based on toluylene diisocyanate, hexamethylene diisocyanate or mixtures thereof, with (1) aliphatic mono- or poly-(hydroxycarboxylic acid) $C_1$-$C_{20}$-alkyl esters (degree of polymerization 2 - 50), (2) polyethylene glycols (molecular weight 500 - 1,500) and (3) 5- or 6-membered, saturated or unsaturated heterocyclic compounds which contain at least 1 nitrogen atom in the ring and contain reactive amino or hydroxy-$C_1$-$C_6$-alkyl groups, until isocyanate groups are no longer detectable, has/have been applied.

2. A process for the preparation of a powdered pigment which contains at least 5% of unsubstituted quinacridone and has improved rheological properties for use in a paint system on an alkyd/melamine, acrylic/melamine, acrylate/isocyanate or polyester/isocyanate basis both of a conventional nature

and of a modern nature of the «high solids» type, which comprises treating the base pigment — as appropriate before, during or after finishing — with 1 to 20% by weight of the active substance of a paint additive of the polyurethane series prepared by reacting polyisocyanurates which still contain free isocyanate groups and are based on toluylene diisocyanate, hexamethylene diisocyanate or mixtures thereof, with (1) aliphatic mono- or poly-(hydroxycarboxylic acid) $C_1$-$C_{20}$-alkyl esters (degree of polymerization 2 - 50), (2) polyethylene glycols (molecular weight 500 - 1,500) and (3) 5- or 6-membered, saturated or unsaturated heterocyclic compounds which contain at least 1 nitrogen atom in the ring and still carry reactive amino or hydroxy-$C_1$-$C_6$-alkyl groups, until isocyanate groups are no longer detectable.

3. The process as claimed in claim 2, wherein the active substance of a paint additive of the polyurethane series dissolved in an organic solvent which is preferably at least partially water-miscible is used.

4. The process as claimed in claim 3, wherein the active substance of a paint additive of the polyurethane series dissolved in an aliphatic alcohol of 1-6 carbon atoms, glycol, glycol ether, glycol ester, ketone of the formula $\text{alkyl-}C_1\text{-}C_4\text{-}\underset{\underset{O}{\|}}{C}\text{-alkyl-}C_1\text{-}C_4$, an aliphatic carboxylic acid of 1-4 carbon atoms, an aliphatic carboxylic acid amide of 1-5 carbon atoms or a cyclic carboxylic acid amide or a mixture of these solvents is used.

5. The process as claimed in claim 3, wherein the active substance of a paint additive of the polyurethane series dissolved in ethanol, propanol, isobutanol, amyl alcohol, ethylene glycol, diethylene glycol, propylene glycol , a glycol mono-$C_1$-$C_6$-alkyl ether, a diglycol mono-$C_1$-$C_4$-alkyl ether, diglycol dimethyl ether, ethylglycol acetate, methylglycol acetate, butyldiglycol acetate, acetone, methyl ethyl ketone, methyl isobutyl ketone, diacetone alcohol, formic acid, acetic acid, propionic acid, dimethylformamide or N-methylpyrrolidone is used.

6. The use of the powdered pigment described in claim 1 for pigmenting a polymeric material.

7. The use of the powdered pigment described in claim 1 for coloring a paint system.

**Revendications**

1. Pigments pulvérulents contenant au moins 5% de quinacridone non substituée, qui ont des propriétés rhéologiques améliorées pour l'utilisation dans des compositions pour peintures à base d'alkyde/mélamine, d'acryl/mélamine, d'acrylate/isocyanate ou de polyester/isocyanate, qu'il s'agisse de compositions courantes ou de compositions modernes du type de celles qui ont une teneur élevée en matière solide («high solids»), pigments caractérisés en ce qu'on aplique sur ceux-ci, éventuellement avant, pendant ou après un finissage, de 1 à 20% en poids, par rapport aux pigments pulvérulents non revêtus, de la substance active d'un additif pour peinture de la série des polyuréthannes que l'on a préparé en faisant réagir des poly-isocyanurates portant des radicaux isocyanato encore libres, à base de diisocyanato-toluène, de diisocyanato-1,6 hexane ou de leurs mélanges, avec (1) des mono- ou poly-(hydroxy-carboxylates) aliphatiques d'alkyles en $C_1$-$C_{20}$ (degré de polymérisation: de 2 à 50), (2) des poly-éthylène-glycols (masse moléculaire: de 500 à 1500) et (3) des hétérocycles saturés ou insaturés à 5 ou 6 maillons, qui contiennent au moins un atome d'azote dans le cycle et qui portent des radicaux amino- ou hydroxyalkyles réactifs en $C_1$-$C_6$, jusqu'à ce qu'on ne puisse plus déceler de radicaux isocyanato.

2. Procédé pour préparer des pigments pulvérulents contenant au moins 5% de quinacridone non substituée, doués de propriétés rhéologiques améliorées pour l'utilisation dans des compositions pour peintures à base d'alkyde/mélamine, d'acryl/mélamine, d'acrylate/isocyanate ou de polyester/isocyanate, qu'il s'agisse de compositions courantes ou de compositions modernes du type des «high solids», procédé caractérisé en ce qu'on traite les pigments de base, éventuellement avant, pendant ou après le finissage, par de 1 à 20% en poids de la substance active d'un additif pour peintures de la série de polyuréthannes que l'on a préparé en faisant réagir des poly-isocyanurates contenant des radicaux isocyanato encore libres, à base de diisocyanato-toluène, de diisocyanato-1,6 hexane ou de leurs mélanges, avec (1) des mono- ou poly-(hydroxy-carboxylates) aliphatiques d'alkyles en $C_1$-$C_{20}$ (degré de polmérisation: de 2 à 50), (2) des poly-éthylène-glycols (masse moléculaire: de 500 à 1500) et (3) des hétérocycles saturés ou insaturés à 5 ou 6 maillons, qui contiennent au moins 1 atome d'azote dans le cycle et qui portent encore des radicaux amino- ou hydroxy-alkyles réactifs en $C_1$-$C_6$, jusqu'à ce qu'on ne puisse plus déceler de radicaux isocyanato.

3. Procédé selon la revendication 2, caratérisé en ce qu'on utilise la substance active d'un additif pour peintures de la série des polyuréthannes, en solution dans un solvant organique qui est de préférence au moins partiellement miscible à l'eau.

4. Procédé selon la revendication 3, caractérisé en ce qu'on utilise la substance active d'un additif pour peintures de la série des polyuréthannes, en solution dans un alcool aliphatique contenant de 1 à 6 atomes de carbone, un glycol, un éther de glycol, un ester de glycol, une cétone de formule $\text{alkyl-}C_1\text{-}C_4\text{-}\underset{\underset{O}{\|}}{C}\text{-alkyl-}C_1\text{-}C_4$, un acide carboxcylique aliphatique contenant de 1 à 4 atomes de carbone, un carboxamide aliphatique contenant de 1 à 5 atomes de carbone ou un carboxamide cyclique, ou dans un mélange de ces solvants.

5. Procédé selon la revendication 3, caractérisé en ce qu'on utilise la substance active d'un additif pour peintures de la série des polyuréthannes en solution dans l'éthanol, le propanol, l'isobutanol, le pentanol, l'éthylène-glycol, le diéthylène-glycol, le propylène-glycol, un éther monoalkylique en $C_1$-$C_6$ du glycol, un éther monoalkylique en $C_1$-$C_4$ du diglycol, l'éther diméthylique du diglycol, l'acétate de l'éthylglycol, l'acétate du méthylglycol, l'acétate du butyldiglycol, l'acétone, la méthyl-éthyl-cétone, la

méthyl-isobutyl-cétone, l'alcool diacétonique, l'acide formique, l'acide acétique, l'acide propionique, le dimethyl-formamide ou la N-méthyl-pyrrolidone.

6. Application des pigments pulvérulents décrits à la revendication 1 pour la pigmentation de matières polymères.

7. Application des pigments pulvérulents décrits à la revendications 1 pour la coloration dans la masse de compositions pour peintures.